# EUROPÄISCHE PATENTSCHRIFT

(11) **EP 0 464 037 B1**
(45) Veröffentlichungstag und Bekanntmachung des Hinweises auf die Patenterteilung: **19.05.1993**
(21) Anmeldenummer: 90903823.4
(22) Anmeldetag: 12.03.1990
(51) Int. Cl.: C11C 3/06, C11C 3/02

(54) **ANLAGE UND VERFAHREN ZUM KONTINUIERLICHEN HERSTELLEN VON FETTSÄUREMONOGLYCERIDEN**
INSTALLATION AND PROCESS FOR CONTINUOUS PRODUCTION OF MONOGLYCERIDES OF FATTY ACIDS
INSTALLATION ET PROCEDE DE PRODUCTION EN CONTINU DE MONOGLYCERIDES D'ACIDES GRAS

(30) Priorität: 20.03.1989 DE 3909097
(43) Veröffentlichungstag der Anmeldung: 08.01.1992
(73) Patentinhaber: Henkel Kommanditgesellschaft auf Aktien, 40191 Düsseldorf (DE)
(72) Erfinder: GUTSCHE, Bernhard, D-4010 Hilden (DE); SÜSSENBACH, Andreas, D-4018 Langenfeld (DE); VOGT, Michael, D-4000 Düsseldorf 12 (DE); LAUTENBACH, Thomas, D-4000 Düsseldorf 12 (DE); ZINK, Fritz, D-4000 Düsseldorf 13 (DE)
(86) Internationale Anmeldenummer: EP9000396
(87) Internationale Veröffentlichungsnummer: WO9011341

(56) Entgegenhaltungen:
- EP-A- 0 041 204
- BE-A- 429 239
- FR-A- 1 060 271
- US-A- 2 206 168
- US-A- 2 478 354

## Beschreibung

Die Erfindung betrifft eine Anlage zum kontinuierlichen Herstellen von Fettsäuremonoglyceriden, insbesondere von Glycerinmonostearat, durch Umestern von Triglyceriden mit Glycerin oder durch Verestern von Fettsäure mit Glycerin, mit einem Rohrreaktor.

Eine solche Anlage ist zum Beispiel aus der DE-OS 30 20 566 bekannt. Bei der bekannten Anlage werden die Fettsäuremonoglyceride durch Umestern von Triglyceriden mit Glycerin in Gegenwart alkalischer Katalysatoren bei Temperaturen über 200 °C hergestellt. Die erfindungsgemäße Anlage ist jedoch auch zum Herstellen von Fettsäuremonoglyceriden durch Verestern von Fettsäure mit Glycerin geeignet. Dabei kann der genannte geschlossene Reaktor zum Beispiel als ein Rohrreaktor oder eine Rührkessel-Kaskade ausgebildet sein.

Neben der obengenannten Offenlegungsschrift werden ferner die US-PS 3 095 431, die US-PS 2 875 221 und die US-PS 2 744 124 genannt.

In der DE-OS 30 20 566 ist der Reaktor als ein offener Rohrreaktor ausgelegt. Vor und während der Reaktion wird daher Wasser durch Abdampfen entfernt. Offene Reaktoren sind in diesem Fall jedoch nur für Labor- und Technikumsanlagen, nicht aber für industrielle Betriebsanlagen geeignet. In solchen Fällen sind nur geschlossene Reaktorsysteme möglich.

In einer derartigen, aus US-A-2 478 354 bekannten Anlage werden Monoester mehrwertiger Alkohole mit Fettsäuren aus vollständig veresterten mehrwertigen Alkoholen bei Temperaturen über 200 °C hergestellt. Dem Rohrreaktor ist ein Verdampfungsgefäß zum Abtrennen des Wassers aus dem Reaktionsgemisch, also nach Abschluß der Reaktion, nachgeschaltet.

Bei größeren Durchsätzen werden relativ lange Rohrreaktoren benötigt, die entsprechend große Druckverluste haben. Ein relativ hoher Überdruck bei Eintritt des Reaktionsgemisches in den Rohrreaktor ist daher notwendig. Die Folge des hohen Überdrucks ist, daß während der Reaktion ein Abtrennen des Wasserdampfes nicht erfolgt. Das überschüssige Wasser wird daher erst nach Beendigung der Reaktion in einem Verdampfungsgefäß abgetrennt. Das im Reaktionsgemisch vorhandene Wasser führt jedoch zu einer unerwünschten höheren Säurezahl im Endprodukt, so daß dieses durch Destillation von der Fettsäure befreit werden muß. Dabei gehen jedoch auch Glycerin und Monoglyceride verloren.

Um bei einer Anlage der eingangs genannten Art diese Probleme zu lösen und insbesondere eine niedrigere Säurezahl zu erreichen, wird vorgeschlagen, daß die Anlage einen zum Entfernen von dampfförmigem Wasser aus dem Reaktionsgemisch ausgelegten Entgasungsbehälter, der zwischen dem Aufheizteil und dem Reaktionsteil des Rohrreaktors angeordnet ist, eine Einrichtung zum Regeln des Füllstands im Entgasungsbehälter und ein mit der Einrichtung gekoppeltes Ventil an einem der Ausgänge des Entgasungsbehälters aufweist. Die erfindungsgemäß vorgesehene Anordnung des Entgasungsbehälters ist besonders effektiv, da das Reaktionsgemisch unmittelbar nach dem Aufheizen und noch vor dem eigentlichen Reaktionsbeginn die höchste Wasserkonzentration aufweist. Dabei kann das Ventil prinzipiell am Dampfausgang oder am Flüssigkeitsausgang des Entgasungsbehälters angeordnet sein. Im letzteren Fall ist dann im Dampfteil des Entgasungsbehälters eine Düse mit fester Öffnung im Dampfausgang vorzusehen.

Durch den erfindungsgemäßen Entgasungsbehälter kann schon während oder vor der Reaktion dampfförmiges Wasser aus dem Reaktionsgemisch entfernt werden. Der dadurch geringere Wassergehalt vermindert die Säurezahl des entstehenden Produkts, so daß eine erheblich geringere Menge an Fettsäure abzudestillieren ist. Für bestimmte Produkte kann sogar völlig auf die Destillation verzichtet werden. Die mit der Destillation auftretenden Verluste von Glycerid und Monoglyceriden treten daher in sehr viel geringerem Umfang auf.

Die Erfindung ist besonders für Anlagen geeignet, die auf einen hohen Durchsatz ausgelegt sind. Ein solcher hoher Durchsatz erfordert einen höheren Druck an der Eintrittsseite des geschlossenen Reaktorsystems, wodurch mehr Wasser sich in der Flüssigphase befindet. Der verstärkte Wasseranteil führt in Anwesenheit des Katalysators und der Glyceride zu einer Spaltung von Glycerid in Glycerin und Fettsäure.

Bei herkömmlichen Reaktionsbedingungen, nämlich Temperaturen über 275 °C und Drücken bis zu 5 bar enthält das flüssige Reaktionsgemisch eine Dampfphase, die zu 70 bis 80 Gew.-% Wasser enthält. Der Rest besteht aus Glycerin. In dem füllstandsgeregelten Entgasungsbehälter kann diese Dampfphase von der Flüssigkeit getrennt und über ein mit der Füllstandsregelung gekoppeltes Ventil dem System entzogen werden. Diese Entgasung reduziert den Wassergehalt im Reaktionsgemisch um 50 bis 75 %. Bei einer Anlage ohne den erfindungsgemäßen Entgasungsbehälter können Glyceride mit Säurezahlen von etwa 2 bis 2,5 nur bei wesentlich höheren Produktverlusten durch Abdestillation der Fettsäure-Glycerid-Gemische hergestellt werden. Mit der erfindungsgemäßen Anlage kann jedoch die Säurezahl des Produktes auf unter 1 gesenkt werden.

Besonders niedrige Säurezahlen werden erreicht, wenn der Entgasungsbehälter beheizbar ist. In diesem Fall wird die für das Verdampfen des Wassers notwendige Verdampfungsenthalpie über die Beheizung zugeführt und so ein Abkühlen des Reaktionsgemisches vermieden.

Die Beheizung wird vorteilhaft durch einen den Entgasungsbehälter zumindest teilweise umgebenden Heizmantel mit Anschlüssen für einen flüssigen oder gasförmigen Wärmeträger durchgeführt.

Bei der Füllstandsregeleinrichtung ist es vorteilhaft, wenn sie derart aufgebaut ist, daß das Ventil bei einem zu niedrigen Füllstand geöffnet wird und daß das Ventil in der an den Dampfausgang des Entgasungsbehälters angeschlossenen Leitung angeordnet ist. Eine derartige Ventilsteuerung ist zwar ungewöhnlich, aber für die erfindungsgemäße Anlage besonders günstig.

Ferner wird bei einer einen Dampfkondensator aufweisenden Anlage vorgeschlagen, daß der Dampfausgang des Entgasungsbehälters an den Dampfkondensator angeschlossen ist. Auf diese Weise kann das zusammen mit Wasser in der Dampfphase vorliegende Glycerin zurückgewonnen werden.

Vorteilhaft ist auch, wenn der Entgasungsbehälter für eine derartige Verweilzeit ausgelegt ist, daß sich die Glycerin- und die Fettphase noch nicht entmischen. Diese Angaben beziehen sich nur auf die flüssige Phase innerhalb des Entgasungsbehälters, aber andererseits wird zusätzlich noch vorgeschlagen, daß der Entgasungsbehälter für eine derartige Verweilzeit ausgelegt ist, daß sich die Dampfphase und die Flüssigkeitsphase trennen. Die Verweilzeit reicht aus, wenn keine Dampfblasen mehr in der Flüssigkeitsphase zu finden sind.

Insbesondere wird vorgeschlagen, daß der Entgasungsbehälter für eine Verweilzeit von etwa 2 Minuten ausgelegt ist. In diesem Fall werden die vorher genannte Forderungen erfüllt. Wichtig ist auch, daß der Entgasungsbehälter eine möglichst große Flüssigkeits-Dampf-Grenzfläche im Vergleich zu seinem Volumen aufweist.

Die Erfindung betrifft auch ein Verfahren zum kontinuierlichen Herstellen von Fettsäuremonoglyceriden, insbesondere von Glycerinmonostearat durch Umestern von Triglyceriden mit Glycerin oder durch Verestern von Fettsäure mit Glycerin in einem geschlossenen Reaktor.

Um die eingangs genannten Probleme zu lösen, wird bei diesem Verfahren vorgeschlagen, daß nach dem Aufheizen auf Reaktionstemperatur und vor dem Reagieren dampfförmiges Wasser aus dem Reaktionsgemisch durch Entgasen entfernt wird, indem man das Reaktionsgemisch sich innerhalb einer bestimmten Verweilzeit in eine dampfförmige Phase und eine flüssige Phase trennen läßt.

Eine noch stärkere Herabsetzung der Säurezahl im Endprodukt erreicht man, wenn das Reaktionsgemisch während des Entgasens geheizt wird.

Beim Entgasen ist es vorteilhaft, daß ein Teil der dampfförmigen Phase abgezogen wird, wenn der Flüssigkeitsspiegel der flüssigen Phase unter eine bestimmte Höhe abgesunken ist.

Zum Rückgewinnen des in der Dampfphase enthaltenen Glycerins wird vorgeschlagen, daß man die durch das Entgasen entstandene dampfförmige Phase kondensieren läßt.

Für das Entgasen wird eine Verweilzeit vorgeschlagen, bei der sich die Glycerin- und die Fettphase noch nicht entmischen. Ferner sollte die Verweilzeit derart sein, daß sich die Dampfphase und die Flüssigkeitsphase trennen. Diese Forderungen werden bei einer Verweilzeit von ein bis drei Minuten erfüllt.

Im folgenden wird die Erfindung näher anhand von Beispielen unter Bezugnahme auf die Zeichnungen erläutert. Es zeigen
- Figur 1:: eine schematische Darstellung der erfindungsgemäßen Anlage und
- Figur 2:: eine Darstellung des erfindungsgemäßen Entgasungsbehälters.

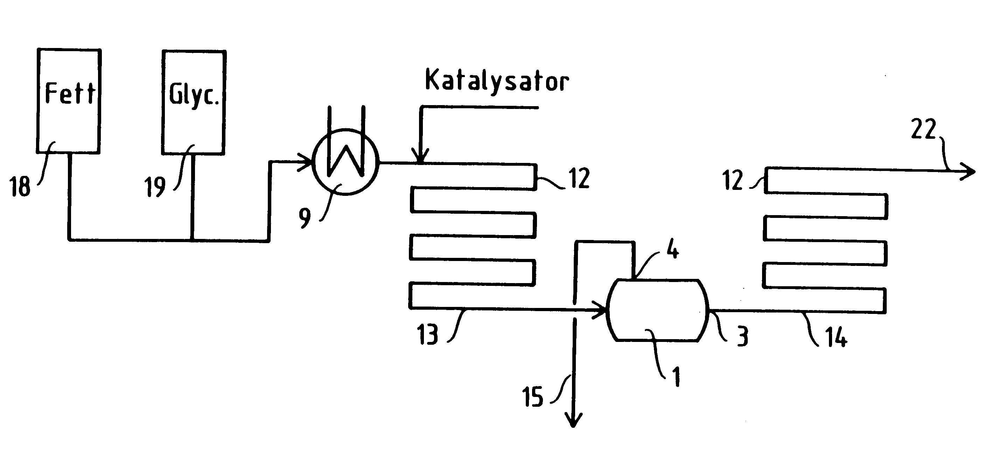

In der Anlage nach Figur 1 liegen als Ausgangsprodukte Fett und Glycerin in Vorlagen 18,19 vor. Beide Ausgangsprodukte werden zunächst mittels eines Wärmeaustauschers 9 vorerwärmt. Nach dem Vorwärmen wird ein Katalysator zugegeben und das Reaktionsgemisch wird im Aufheizteil 13 des Rohrreaktors 12 auf die Reaktionstemperatur gebracht. Bevor das Reaktionsgemisch den Reaktionsteil 14 des Rohrreaktors 12 durchläuft, tritt es in den Entgasungsbehälter 1 ein. Hier besteht das Reaktionsgemisch aus 3 Phasen, nämlich Fett, Glycerin und Dampf.

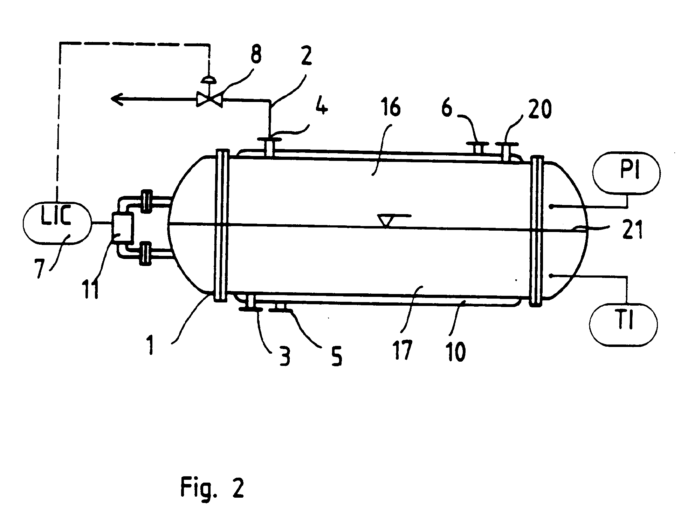

Der Entgasungsbehälter 1 ist besonders deutlich in Figur 2 dargestellt. Nachdem das Reaktionsgemisch in den Entgasungsbehälter 1 eingetreten ist, scheidet sich der im Gemisch befindliche Dampf im oberen Teil des Behälters als Dampfphase 16 ab. Im unteren Teil des Behälters stellt sich die Flüssigkeitsphase 17 ein. Das entgaste Gemisch verläßt am unteren Teil den Entgasungsbehälter 1 am Flüssigkeitsausgang 3, während der Dampf 16 über ein Regelventil 8 und den Dampfausgang 4 dem Entgasungsbehältern entzogen und über eine Leitung 2 einem Kondensator zugeführt wird. Der Behälter 1 weist eine Füllstandsmeßeinrichtung 11 auf, die über eine Regeleinrichtung 7 mit dem Regelventil 8 gekoppelt ist. Der Entgasungsbehälter 1 wird über einen als Doppelmantel ausgebildeten Heizmantel 10 mit Anschlüssen 5 und 6 begleitbeheizt, um eine Abkühlung und damit eine Verschlechterung der Entgasung durch die mit der Verdampfung verbundene Abkühlung zu verhindern. Mit der Bezugszahl 21 ist die Flüssigkeitsoberfläche in Figur 2 bezeichnet. Das Reaktionsgemisch tritt durch den Einlaß 20 in den Entgasungsbehälter 1 ein.

Nach dem Entgasen läuft das Reaktionsgemisch durch den Reaktionsteil 14 des Rohrreaktors 12. Im anschließenden Destillationsteil werden Restwasser, das überschüssige Glycerin und Restfettsäure abgetrennt. Nachstehend sind einige Ergebnisse mit dem Einsatz eines unbeheizten Entgasungsbehälters angegeben. Dadurch läßt sich bei sonst gleichen Bedingungen eine Reduzierung der Säurezahl von typischerweise 2,5 bis 3,0 auf typischerweise 1,8 bis 2,3, gemessen im Roh-Monoglycerid nach Abtrennung von Restwasser und überschüssigem Glycerin, erzielen.

Im folgenden werden Versuchsergebnisse mit Rindertalg dargestellt, der eine untypisch hohe Säurezahl aufwies. Alle Versuche wurden jedoch mit dem gleichen Rindertalg der gleichen Säurezahl gefahren.
- Durchsatz:: 1000 l/h Rindertalg, gehärtet
250 l/h Glycerin Nobel Test 99.5

Betriebsbedingungen am Entgasungsbehälter:
- Temperatur:: 300 °C
- Druck:: 3 bar abs.

Charakteristische Produktdaten an der o.a. Meßstelle
1. Anlage ohne Entgasungsbehälter:
   - Gehalt an Monoglycerid:: 57,2 Gew.-%
   - Gehalt an freiem Glycerin:: 1,2 Gew.-%
   - Säurezahl:: 3,55
2. Anlage mit Entgasungsbehälter
   (2 Stunden nach Inbetriebnahme):
   - Gehalt an Monoglycerid:: 54,3 Gew.-%
   - Gehalt an freiem Glycerin:: 0,9 Gew.-%
   - Säurezahl:: 2,35
3. Nach weiteren 2,5 Stunden mit Entgasungsbehälter:
   - Gehalt an Monoglycerid:: 57,2 Gew.-%
   - Gehalt an freiem Glycerin:: 0,9 Gew.-%
   - Säurezahl:: 2,35

Dieses Ergebnis des kontinuierlichen Versuchs zeigt, daß die Säurezahl sich auf den Wert 2,35 stabilisiert hat.

### Bezugszeichenliste

- 1: Entgasungsbehälter
- 2: Leitung
- 3: Ausgang, Flüssigkeitsausgang
- 4: Ausgang, Dampfausgang
- 5: Anschluß
- 6: Anschluß
- 7: Regeleinrichtung
- 8: Ventil
- 9: Wärmeaustauscher
- 10: Heizmantel
- 11: Füllstandsmeßeinrichtung
- 12: Reaktor, Rohrreaktor
- 13: Aufheizteil
- 14: Reaktionsteil
- 15: Dampfleitung zum Kondensator
- 16: Dampfphase
- 17: Flüssigkeitsphase
- 18: Vorlage
- 19: Vorlage
- 20: Einlaß
- 21: Flüssigkeitsoberfläche
- 22: Leitung zum Destillationsteil

- LIC: Anzeige- und Regeleinrichtung für das Flüssigkeitsniveau
- PI: Druckanzeige
- TI: Temperaturanzeige

## Patentansprüche

1. Anlage zum kontinuierlichen Herstellen von Fettsäuremonoglyceriden, insbesondere von Glycerinmonostearat, durch Umestern von Triglyceriden mit Glycerin oder durch Verestern von Fettsäure mit Glycerin, mit einem Rohrreaktor (12),
gekennzeichnet durch
einen zum Entfernen von dampfförmigem Wasser aus dem Reaktionsgemisch ausgelegten Entgasungsbehälter (1), der zwischen dem Aufheizteil (13) und dem Reaktionsteil (14) des Rohrreaktors angeordnet ist, eine Einrichtung zum Regeln des Füllstands im Entgasungsbehälter und ein mit der Einrichtung gekoppeltes Ventil (8) an einem der Ausgänge (3, 4) des Entgasungsbehälters (1).

2. Anlage nach Anspruch 1,
dadurch gekennzeichnet,
daß der Entgasungsbehälter (1) beheizbar ist.

3. Anlage nach Anspruch 2,
gekennzeichnet durch
einen den Entgasungsbehälter (1) zumindest teilweise umgebenden Heizmantel (10) mit Anschlüssen (5, 6) für einen flüssigen oder gasförmigen Wärmeträger.

4. Anlage nach einem der Ansprüche 1 bis 3,
dadurch gekennzeichnet,
daß die Einrichtung (7) zum Regeln des Füllstands im Entgasungsbehälter (1) derart aufgebaut ist, daß das Ventil (8) bei einem zu niedrigen Füllstand geöffnet wird und daß das Ventil (8) in der an den Dampfausgang (4) des Entgasungsbehälters (1) angeschlossenen Leitung (2) angeordnet ist.

5. Anlage nach einem der Ansprüche 1 bis 4 mit einem Dampfkondensator,
dadurch gekennzeichnet,
daß der Dampfausgang (4) des Entgasungsbehälters (1) an den Dampfkondensator (Leitung 15) angeschlossen ist.

6. Anlage nach einem der Ansprüche 1 bis 5,
dadurch gekennzeichnet,
daß der Entgasungsbehälter (1) für eine derartige Verweilzeit ausgelegt ist, daß sich die Glycerin- und die Fettphase noch nicht entmischen.

7. Anlage nach einem der Ansprüche 1 bis 6,
dadurch gekennzeichnet,
daß der Entgasungsbehälter (1) für eine derartige Verweilzeit ausgelegt ist, daß sich die Dampfphase (16) und die Flüssigkeitsphase (17) trennen.

8. Anlage nach einem der Ansprüche 1 bis 7,
dadurch gekennzeichnet,
daß der Entgasungsbehälter (1) für eine Verweilzeit von etwa zwei Minuten ausgelegt ist.

9. Verfahren zum kontinuierlichen Herstellen von Fettsäuremonoglyceriden, insbesondere von Glycerinmonostearat, durch Umestern von Triglyceriden mit Glycerin oder durch Verestern von Fettsäure mit Glyrerin in einem geschlossenen Reaktor (12), dadurch gekennzeichnet,
daß nach dem Aufheizen auf Reaktionstemperatur und vor dem Reagieren dampfförmiges Wasser aus dem Reaktionsgemisch durch Entgasen entfernt wird, indem man das Reaktionsgemisch sich innerhalb einer bestimmten Verweilzeit in eine dampfförmige Phase und eine flüssige Phase trennen läßt.

10. Verfahren nach Anspruch 11,
dadurch gekennzeichnet,
daß das Reaktionsgemisch während des Entgasens geheizt wird.

11. Verfahren nach Anspruch 9 oder 10, dadurch gekennzeichnet,
daß ein Teil der dampfförmigen Phase abgezogen wird, wenn der Flüssigkeitsspiegel der flüsssigen Phase unter eine bestimmte Höhe abgesunken ist.

12. Verfahren nach einem der Ansprüche 9 bis 11,
dadurch gekennzeichnet,
daß man die durch das Entgasen entstandene dampfförmige Phase kondensieren läßt.

13. Verfahren nach einem der Ansprüche 9 bis 12,
gekennzeichnet durch
eine Verweilzeit, bei der sich die Glycerin- und die Fettphase noch nicht entmischen.

14. Verfahren nach einem der Ansprüche 9 bis 13,
gekennzeichnet durch
eine Verweilzeit, bei der sich die Dampfphase und die Flüssigkeitsphase trennen.

15. Verfahren nach einem der Ansprüche 9 bis 14,
gekennzeichnet durch
eine Verweilzeit von ein bis drei Minuten.

## Claims

1. A plant for the continuous production of fatty acid monoglycerides, more especially glycerol monostearate, by transesterification of triglycerides with glycerol or by esterification of fatty acid with glycerol, comprising a tube reactor (12), characterized by a degassing vessel (1) which is designed to remove water vapor from the reaction mixture and which is arranged between the heating section (13) and the reaction section (14) of the tube reactor, a governor for regulating the filling level of the degassing vessel and a valve (8) coupled to that governor at one of the outlets (3,4) of the degassing vessel (1).

2. A plant as claimed in claim 1, characterized in that the degassing vessel (1) is heatable.

3. A plant as claimed in claim 2, characterized by a heating jacket (10) at least partly surrounding the degassing vessel (1) with connections (5,6) for a liquid or gaseous heat transfer medium.

4. A plant as claimed in any of claims 1 to 3, characterized in that the governor (7) for regulating the filling level of the degassing vessel (1) is designed in such a way that the valve (8) is opened if the filling level is too low and in that the valve (8) is arranged in the pipe (2) connected to the vapor outlet (4) of the degassing vessel (1).

5. A plant as claimed in any of claims 1 to 4 comprising a vapor condenser, characterized in that the vapor outlet (4) of the degassing vessel (1) is connected to the vapor condenser (pipe 15).

6. A plant as claimed in any of claims 1 to 5, characterized in that the degassing vessel (1) is designed for such a residence time that the glycerol phase and the fatty acid phase do not separate.

7. A plant as claimed in any of claims 1 to 8, characterized in that the degassing vessel (1) is designed for such a residence time that the vapor phase (16) and the liquid phase (17) separate.

8. A plant as claimed in any of claims 1 to 7, characterized in that the degassing vessel (1) is designed for a residence time of about two minutes.

9. A process for the continuous production of fatty acid monoglycerides, more particularly glycerol monostearate, by reaction of triglycerides with glycerol or by esterification of fatty acid with glycerol in a closed reactor (12), characterized in that water vapor is removed from the reaction mixture by degassing before completion of the reaction by division of the reaction mixture into a vapor phase and a liquid phase within a certain residence time.

10. A process as claimed in claim 9, characterized in that the reaction mixture is heated during degassing.

11. A process as claimed in claim 9 or 10, characterized in that part of the vapor phase is removed if the liquid level of the liquid phase has fallen below a certain level.

12. A process as claimed in any of claims 9 to 11, characterized in that the vapor phase formed by degassing is condensed.

13. A process as claimed in any of claims 9 to 12, characterized by a residence time in which the glycerol phase and the fatty acid phase do not separate.

14. A process as claimed in any of claims 9 to 13, characterized by a residence time in which the vapor phase and the liquid phase separate.

15. A process as claimed in any of claims 9 to 14, characterized by a residence time of one to three minutes.

## Revendications

1. Installation pour la fabrication en continu de monoglycérides d'acides gras, en particulier de monostéarate de glycérine, par transestérification de triglycérides avec de la glycérine ou par estérification d'acides gras avec de la glycérine, avec un réacteur tubulaire (12), caractérisée par un récipient de dégazage (1), prévu pour éliminer l'eau sous forme de vapeur du mélange réactionnel et placé entre la partie de chauffage (13) et la partie de réaction (14) du réacteur tubulaire, un dispositif pour régler le niveau de remplissage dans le récipient de dégazage, et une vanne (8) reliée au dispositif placée sur l'une des sorties (3, 4) du récipient de dégazage (1).

2. Installation selon la revendication 1, caractérisée en ce que le récipient de dégazage (1) peut être chauffé.

3. Installation selon la revendication 2, caractérisée par une enveloppe chauffante (10) entourant au moins partiellement le récipient de dégazage (1), avec des raccordements (5, 6) pour un fluide caloporteur liquide ou gazeux.

4. Installation selon l'une des revendications 1 à 3, caractérisée en ce que le dispositif (7) pour régler le niveau de remplissage dans le récipient de dégazage (1) est configuré de manière telle que la vanne (8) s'ouvre lorsque le niveau est trop bas et que la vanne (8) est placée dans la conduite (2) reliée à la sortie de vapeur (4) du récipient de dégazage (1).

5. Installation selon l'une des revendications 1 à 4 avec un condenseur de vapeur, caractérisée en ce que la sortie de vapeur (4) du récipient de dégazage (1) est reliée au condenseur de vapeur (conduite 15).

6. Installation selon l'une des revendications 1 à 5, caractérisée en ce que le récipient de dégazage (1) est prévu pour un temps de séjour tel que la phase glycérine et la phase grasse ne se séparent pas encore du mélange.

7. Installation selon l'une des revendications 1 à 6, caractérisée en ce que le récipient de dégazage (1) est prévu pour un temps de séjour tel que la phase vapeur (6) et la phase liquide (17) se séparent.

8. Installation selon l'une des revendications 1 à 7, caractérisée en ce que le récipient de dégazage (1) est prévu pour un temps de séjour d'environ deux minutes.

9. Procédé pour la fabrication en continu de monoglycérides d'acides gras, en particulier de monostéarate de glycérine, par transestérification de triglycérides avec de la glycérine ou par estérification d'acides gras avec de la glycérine dans un réacteur fermé (12), procédé caractérisé en ce que l'eau sous forme de vapeur est éliminée du mélange réactionnel par dégazage après chauffage à la température de réaction et avant la réaction, en laissant le mélange réactionnel se séparer en une phase vapeur et une phase liquide en un laps de temps de séjour déterminé.

10. Procédé selon la revendication 11 (9), caractérisé en ce que le mélange réactionnel est chauffé durant le dégazage.

11. Procédé selon la revendication 9 ou 10, caractérisé en ce qu'une partie de la phase vapeur est aspirée lorsque le niveau de la phase liquide est descendu en dessous d'une certaine hauteur.

12. Procédé selon l'une des revendications 9 à 11, caractérisé en ce que l'on condense la phase vapeur produite par le dégazage.

13. Procédé selon l'une des revendications 9 à 12, caractérisé par un temps de séjour pour lequel la phase glycérine et la phase grasse ne se séparent pas encore du mélange.

14. Procédé selon l'une des revendications 9 à 13, caractérisé par un temps de séjour pour lequel la phase vapeur et la phase liquide se séparent.

15. Procédé selon l'une des revendications 9 à 14, caractérisé par un temps de séjour d'une à trois minutes.
